# EUROPEAN PATENT APPLICATION

(11) **EP 1 587 027 A1**
(43) Date of publication of application: **19.10.2005**
(21) Application number: 05011534.4
(22) Date of filing: 26.02.2002
(51) Int. Cl.: G06K 15/00, G06K 15/12

(54) **Printer controller**

(62) Divisional of application: 02733057.0
(71) Applicant: Matsumura, Eisei, Yamato-shi, Kanagawa-ken 242-0002 (JP)
(72) Inventor: Matsumura, Eisei, Yamato-shi, Kanagawa-ken 242-0002 (JP)
(74) Representative: Klunker . Schmitt-Nilson . Hirsch

(57) **Abstract**

The objective of the present invention is to provide a printer controller capable of processing image information such as four primary colors in parallel and transmitting processed data to a printer in a high-speed network environment.

The printer controller arranged as follows attains the above-mentioned objective: a network controller for receiving data from an outside device; a digital signal processor having a VLIW structure capable of parallel processing; and a fixed logic LSI for receiving/transmitting data from/to a printer engine, where: respective cyan, magenta, yellow and black as four primary colors are allocated to respective clusters, and processed in parallel, and processed results are transmitted to the printer engine via the fixed logic LSI.

## Description

### BACKGROUND OF THE INVENTION

### [Field of the Invention]

The present invention relates to a printer controller, which receives data for printing from a computer or the like, interprets received data, unfolds interpreted data into printing data and outputs printing data to a printer engine.

### [Brief Description of the Related Art]

Usually a printer controller comprises a RISC processor or a CISC processor and a special purpose LSI so called "ASIC" having functions such as a direct access memory control, special image processing or the like, controlled by the RISC processor or the CISC processor.

The above-mentioned printer controller sequentially processes color data, for example, in order of C>M>Y>K. Here reference characters C, M, Y and K represent four primary colors i.e. cyan, magenta, yellow and black. After the processed data is stored in a memory, the processed data is transmitted to the printer engine by the direct memory access controller consisted of the special purpose LSI such as the ASIC or the like, when the data is required to output via a printer.

A color table for the printer usually is determined uniformly, but the color table is not adjusted in accordance with changes in printing conditions.

The amount of printing data transmitted via networks is increasing recently, as the Internet is widely prevailing. In addition formats for printing data are diversifying into a PostScript, a PCL, a PDF and the like and the data volume is also increasing.

Further the following various improvements have been attained in printing apparatuses. (1) Printing rates are being increased to a larger extent by printer engines. (2) Higher resolutions, for example, from 600DPI to 1200DPI are being realized. (3) Higher resolutions in color display, for example, from 1 bit to 4 bit or further 16 bit for respective four primary colors, C, M, Y, K are also being realized. A fast network printer cannot be realized by utilizing a conventional printer controller, since a processing rate of the image data by the printer controller is too low to keep up with the above-described improvements.

It is difficult to obtain stable and natural flavors in color expression, if the image data is processed in a uniform way, and if the color table for printing is not adjusted in accordance with diversified printing formats and conditions. Also, it is difficult to express a texture peculiar to an object to be printed, unless an image processing on the object is performed properly.

### SUMMARY OF THE INVENTION

In order to solve the above-mentioned problems, a printer controller capable of processing four primary colors C, M, Y, K in parallel in place of conventional sequential processing in order of C>M>Y>K, thus a much faster printing is realized.

In order to realize a fast printing, processed data unfolded as bit map data is directly transmitted from a digital signal processor to a printer engine under a direct instruction from the digital signal processor.

Stable printing quality can be obtained, when a color matching table is properly optimized by utilizing a software in the digital signal processor but not by a uniform processing by the ASIC or the like.

Suitable printing color and expression can be also obtained, after identifying the object to be printed in an image area by utilizing the software.

### BRIEF DESCRIPTION OF DRAWINGS

FIG.1 is a block diagram illustrating a basic arrangement of an embodiment according to the present invention.
FIG.2 is a block diagram illustrating an internal arrangement of a media processor.
FIG.3 shows a structure of a VLIW (Very Long Instruction Word).
FIG.4 shows information provided from the printer engine to the printer controller.
FIG.5 is a flow chart illustrating an adjusting procedure of the color table.
FIG.6 shows an example of printed data.

### DETAILED DESCRIPTION OF THE PREFERRED EMBODIMENTS

Hereinafter embodiments according to the present invention are explained by referring to drawings.

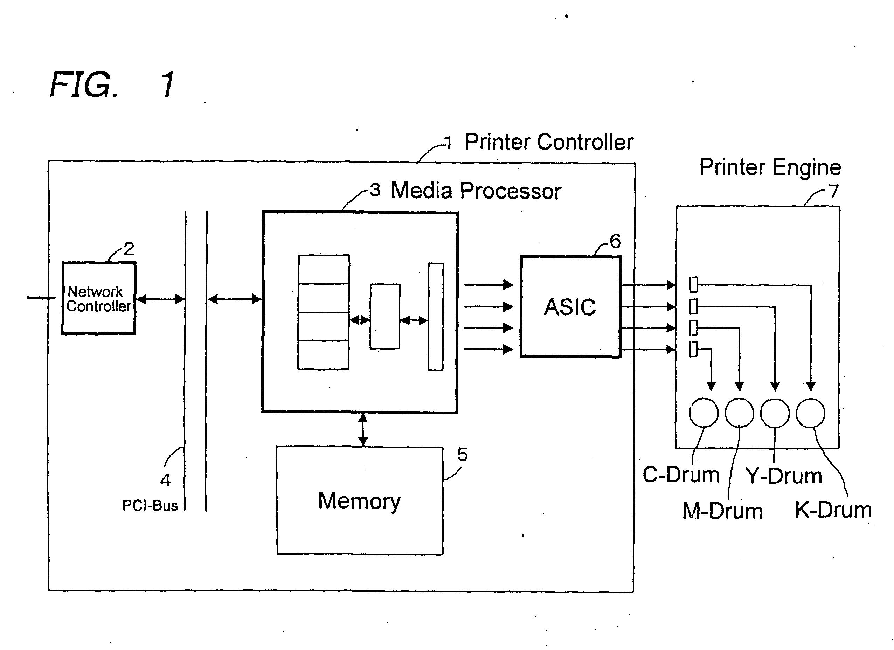

FIG.1 is the block diagram illustrating the basic arrangement of the present invention. A reference numeral "1" is a printer controller comprising a network controller 2, a media processor 3, a PCI bus 4, a memory 5 and an ASIC 6. The printer controller 1 has functions for controlling a network, controlling a connecting interface to a personal computer or a computer, interpreting a language, unfolding interpreted data and transmitting unfolded bit map data to the printer engine. Usually a RISC processor or a CISC processor is used as the network controller 2, which controls the network and the connecting interface to the personal computer or the computer. Sometimes, the language interpretation may be executed by the network controller 2. The media processor 3 is a kind of digital signal processor, but usually means the digital signal processor with high performance. A micro architecture of the media processor is called the VLIW (Very long Instruction Word). The network controller 2 and the media processor 3 are connected via the PCI bus 4. The memory 5 usually comprising an SDRAM, stores system software for the media processor 3 and application programs of a PDL (Page Description Language). The ASIC 6 is a fixed logic LSI, receives independent signals on primary colors, C, M, Y, K from a data transfer controller (which will be explained below) in the media processor 3, converts received signals into video signals and transmits video signals to a printer engine 7. The printer engine 7 is arranged in, for example, a color laser beam printer having drums for four primary colors, C, M, Y, K and controls C, M, Y, K drums independently.

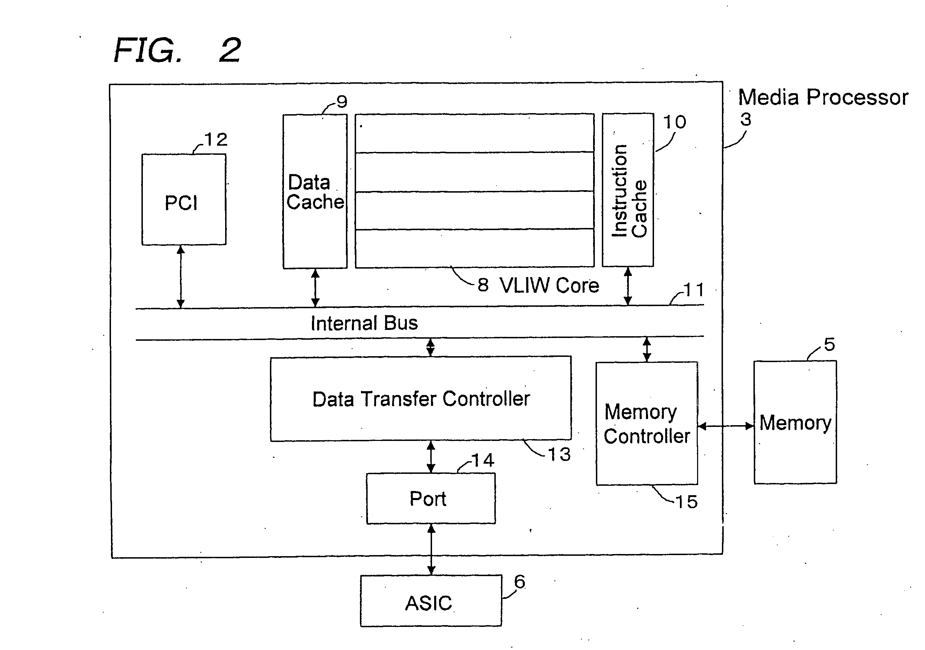

FIG.2 is the block diagram illustrating the internal arrangement of the media processor 3. A reference numeral "8" is a VLIW core for executing parallel instructions. A reference numeral "9" is called a data cache having a function of storing data to be processed. A reference numeral "10" is called an instruction cache having a function of storing instructions. A reference numeral "11" is an internal bus connected to respective units. A reference numeral "12" is a PCI unit for converting signals so as to connect the internal bus 11 to the PCI bus 4 (see FIG.1). A reference numeral "13" is the data transfer controller having a function of transferring data among respective units under ordinary instructions. A reference numeral "14" is a data port for receiving independent bit map data of respective colors, C, M, Y, K from the data cache 9 under instructions from data transfer controller 13. A reference numeral "15" is a memory controller for controlling the external memory 5.

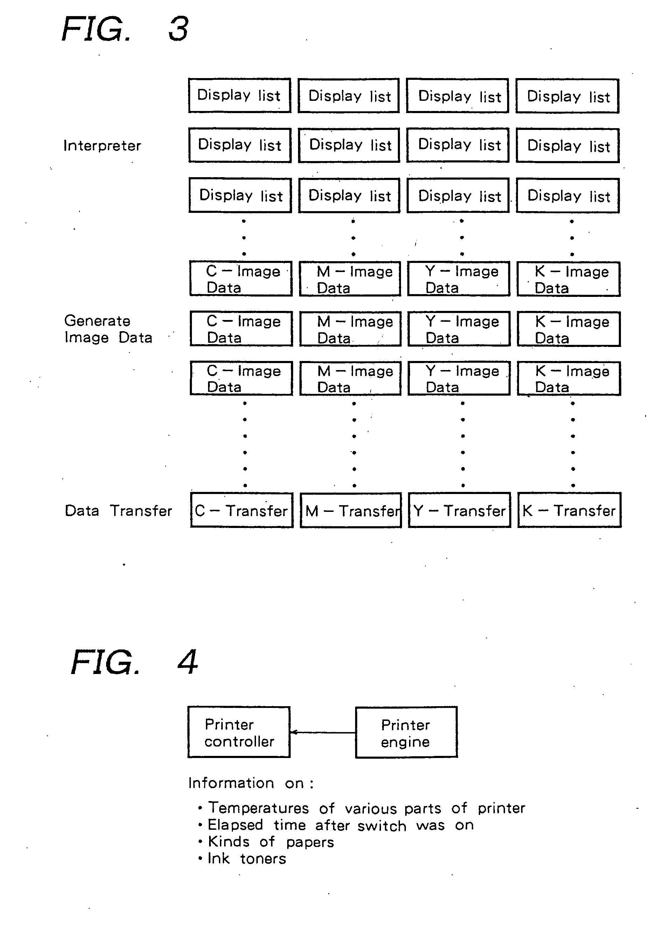

FIG. 3 shows the structure of the VLIW, the most important portion of the present invention. As one of the examples, four processing flows executed by four parallel instructions for four primary colors are illustrated in FIG.3. As a first step, a printer data file is received and interpreted into display lists. Independent instructions for respective four primary colors C, M, Y, K are executed based on the display lists so as to generate image data. In other words instructions are executed, after C, M, Y, K are allocated to respective clusters. The generated image data is directly outputted to the data port 14 under a data transfer instruction.

FIG.4 shows information provided from the printer engine 7 to the printer controller 1. More specifically, information on the printer regarding temperatures of various parts of the printer, an elapsed time after the printer was on, the type of printing medium, ink/toner and the like, is provided from the printer engine 7 to the printer controller 1. The provided information is converted to numeric data by the printer controller 1 and is returned to the printer engine 7 for utilizing to adjust the color table properly. The present invention is applicable to not only the color printer but also applicable to a color display, because colors displayed in the color display also change in accordance with the elapsed time and the temperature.

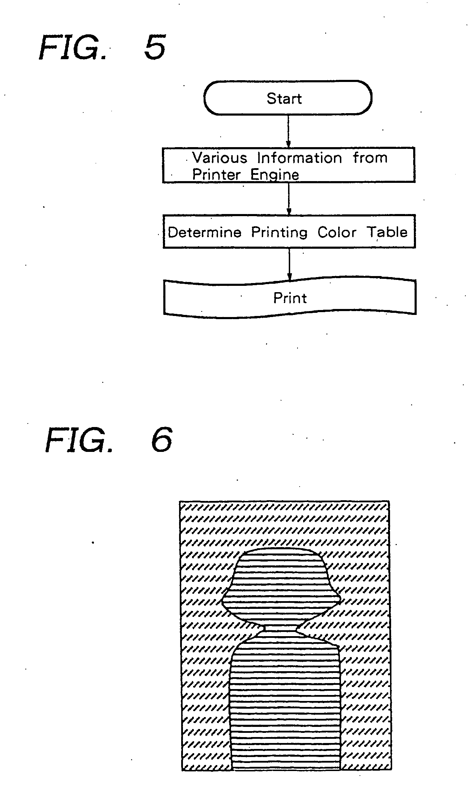

FIG.5 is the flow chart illustrating the adjusting procedure of the color table. The optimized color table is generated based on the information from the printer engine 7 for generating color data whenever printing operations are executed.

FIG.6 schematically shows an example of printed data. The figure illustrates a way to generate data by processing colors in accordance with properties of the object, when still J-PEG image data include properties of the object. Optimized data of the object can be generated by separating image areas such as human skin, unfocused portion shot by a one lens camera, a metallic material and so forth.

### Preferred Embodiments of the Invention

1. A printer controller comprising:
   a network controller for receiving data from an outside device;
   a digital signal processor having a VLIW structure capable of parallel processing; and
   a fixed logic LSI for receiving/transmitting data from/to a printer engine, wherein:
      respective cyan, magenta, yellow and black as four primary colors are allocated to respective clusters in said VLIW structure and are processed in parallel; and
      processed results are transmitted to the printer engine via said fixed logic LSI.
2. The printer controller according to claim 1, wherein:
   further comprises an outputting means for continuously outputting a huge volume of data to the printer engine under an instruction from said digital signal processor.
3. A printer controller for processing image data by software comprising:
   a network controller for receiving data from an outside device;
   a digital signal processor;
   a fixed logic LSI for receiving/transmitting data from/to a printer engine; and further
   a means for receiving drum temperature data and a history of a printer via the printer engine and for transforming received data into numeric data wherein:
      said numeric data is transmitted to the printer engine so that a color table of the printer is adjusted from time to time for a proper printing color tone.
4. The printer controller according to claim 3, wherein:
   received image data having peculiar object information in every area via said network controller is processed so as to optimize said image data for proper printing and to output said optimized image data to the printer engine.

## Claims

1. A printer controller for processing image data by software comprising:
a network controller for receiving data from an outside device;
a digital signal processor; a fixed logic LSI for receiving/transmitting data from/to a printer engine; and further a means for receiving drum temperature data and a history of a printer via the printer engine and for transforming received data into numeric data wherein:
said numeric data is transmitted to the printer engine so that a color table of the printer is adjusted from time to time for a proper printing color tone.

2. The printer controller according to claim 1, wherein:
received image data having peculiar object information in every area via said network controller is processed so as to optimize said image data for proper printing and to output said optimized image data to the printer engine.
